# EUROPEAN PATENT APPLICATION

(11) **EP 4 848 157 A1**
(43) Date of publication of application: **02.12.2026**
(21) Application number: 26178081.1
(22) Date of filing: 11.05.2026
(51) Int. Cl.: G06N 10/60, G06N 10/20, G06N 20/10

(54) **COMPUTER PROGRAM, CALCULATION METHOD, AND INFORMATION PROCESSING APPARATUS**

(30) Priority: 29.05.2025 JP 2025089950
(71) Applicant: FUJITSU LIMITED, Kawasaki-shi, Kanagawa 211-8588 (JP)
(72) Inventor: CHINZEI, Koki, Kawasaki-shi (JP)
(74) Representative: Haseltine Lake Kempner LLP

(57) **Abstract**

An information processing apparatus acquires data of a first classical shadow corresponding to first quantum data and data of a second classical shadow corresponding to second quantum data. The information processing apparatus sets a plurality of local subsystems each of which is a set of local lattice points in a space having a plurality of lattice points corresponding respectively to a plurality of qubits. The information processing apparatus calculates, for each local subsystem, a value of a first kernel function based on a data element corresponding to a lattice point belonging to that local subsystem among first data elements of the first classical shadow and second data elements of the second classical shadow. The information processing apparatus calculates a value of a second kernel function corresponding to the first and second classical shadows based on a plurality of values of the first kernel function corresponding to the local subsystems.

## Description

### FIELD

The embodiments discussed herein relate to a computer program, a calculation method, and an information processing apparatus.

### BACKGROUND

Quantum computers are computing devices based on the principles of quantum mechanics. Utilizing quantum superposition states, quantum computers are able to perform computation faster than classical computers for certain problems. Classical computers are also referred to as von Neumann computers.

Here, in machine learning, kernel methods are known as techniques for solving nonlinear problems. For example, in the case of solving a nonlinear problem, data is mapped to a high-dimensional feature space and a linear problem is solved in the feature space, thereby solving the nonlinear problem in the original space. By contrast, kernel methods are able to perform computation using kernel functions, without actually mapping data into a high-dimensional space. Kernel functions are functions that represent the degree of similarity between pieces of data.

Quantum kernel methods are known as one approach to quantum machine learning using a quantum computer. A quantum kernel method is a kernel method that is implemented on a quantum computer, and makes it possible to solve a complex problem by mapping data to a quantum feature space. In general, it is not possible to efficiently simulate the quantum feature space on classical computers. Therefore, quantum kernel methods are expected to have a quantum advantage, and exhibit exponential acceleration of computation for artificial problems. However, such quantum kernel methods are not yet practical due to the vanishing similarity issue, which is a problem that values of a kernel function concentrate to a certain point.

As types of quantum kernel methods, a projected kernel method and a shadow kernel method have been proposed. The projected kernel method is a technique in which reduced density matrices (quantum states reduced to subsystems) of quantum data are obtained on a quantum computer, and the kernels between the reduced density matrices are computed on a classical computer. The shadow kernel method is a technique in which classical shadows, which are classical approximations of quantum states, are obtained on a quantum computer, and the kernels between the classical shadows are calculated on a classical computer.

For example, quantum computing employing kernel methods for machine learning has been proposed. Quantum feature kernel alignment has also been proposed, for example, for classifier and other quantum decision making system training using a hybrid classical-quantum computing system. In addition, for example, a method for optimizing a fraud prevention model by combining classical machine learning and quantum machine learning has been proposed. In addition, for example, a method for adjusting the performance of a kernel operation based on inference has been proposed. See, for example, the following literatures.
Japanese Laid-open Patent Publication No. 2024-125311
Japanese Laid-open Patent Publication No. 2022-526072
U.S. Patent Application Publication No. 2023/0126764
U.S. Patent Application Publication No. 2021/0256427
Maria Schuld and one other, "Quantum Machine Learning in Feature Hilbert Spaces", Physical Review Letters. 122,040504, Feb. 1, 2019
Yunchao Liu, and two others, "A rigorous and robust quantum speed-up in supervised machine learning", Nature Physics 17, 1013-1017(2021), Jul. 12, 2021
Hsin-Yuan Huang and six others, "Power of data in quantum machine learning", Nature Communications 12, Article number: 2631(2021), May 11, 2021
Hsin-Yuan Huang and four others, "Provably efficient machine learning for quantum many-body problems", Science vol. 377, Issue 6613, Sep. 23, 2022

In existing kernel calculation methods such as the above-described shadow kernel method, the dimensionality of a feature space becomes exceedingly large as the number of qubits increases. In general, the generalization of a trained model needs approximately as many pieces of training data as there are features. Thus, as the number of qubits increases, the number of pieces of training data needed for the generalization also increases. However, quantum computers in the near future will have insufficient computational resources, and may be unable to generate a large amount of quantum data. As a result, it may be difficult to prepare a sufficient number of pieces of training data.

### SUMMARY

In one aspect, the present disclosure aims to reduce the number of pieces of training data to be used in machine learning.

In one aspect, there is provided a computer program that causes a computer to perform a process including: acquiring data of a first classical shadow corresponding to first quantum data represented by a plurality of qubits and data of a second classical shadow corresponding to second quantum data represented by the plurality of qubits; setting a plurality of local subsystems each of which is a set of local lattice points in a space having a plurality of lattice points corresponding respectively to the plurality of qubits; calculating, for each of the plurality of local subsystems, a value of a first kernel function based on a first data element and a second data element corresponding to a lattice point belonging to the each of the plurality of local subsystems among a plurality of first data elements corresponding to the plurality of qubits, the plurality of first data elements being included in the first classical shadow, and a plurality of second data elements corresponding to the plurality of qubits, the plurality of second data elements being included in the second classical shadow; and calculating a value of a second kernel function corresponding to the first classical shadow and the second classical shadow based on a plurality of values of the first kernel function corresponding respectively to the plurality of local subsystems.

### BRIEF DESCRIPTION OF DRAWINGS

Reference will now be made, by way of example only, to the following drawings, in which:
FIG. 1 is a diagram for describing an information processing apparatus according to a first embodiment;
FIG. 2 illustrates an example of a quantum computing system according to a second embodiment;
FIG. 3 illustrates an example of hardware of the quantum computing system;
FIG. 4 illustrates an example of mapping data to a high-dimensional feature space;
FIG. 5 illustrates an example of functions of a classical computer;
FIG. 6 illustrates an example of a quantum circuit used to acquire a classical shadow;
FIG. 7 illustrates examples of local subsystems;
FIG. 8 illustrates an example of adaptive selection of a local subsystem;
FIG. 9 illustrates an example of cross-validation;
FIG. 10 is a flowchart illustrating an example of a training process;
FIG. 11 is a flowchart illustrating an example of an inference process;
FIG. 12 illustrates a quantum circuit used in an experiment;
FIGS. 13A, 13B, and 13C illustrate examples of local subsystems used in the experiment;
FIG. 14 is a diagram for describing regression analysis;
FIGS. 15A, 15B, and 15C illustrate examples of prediction results for a local physical quantity expectation value;
FIGS. 16A, 16B, and 16C illustrate examples of prediction results for a long-range correlation coefficient; and
FIGS. 17A, 17B, and 17C illustrate examples of prediction results for the purity of a subsystem.

### DESCRIPTION OF EMBODIMENTS

Hereinafter, embodiments will be described with reference to the drawings. A plurality of embodiments may be combined unless they exclude each other.

### [First Embodiment]

First, a first embodiment will be described.

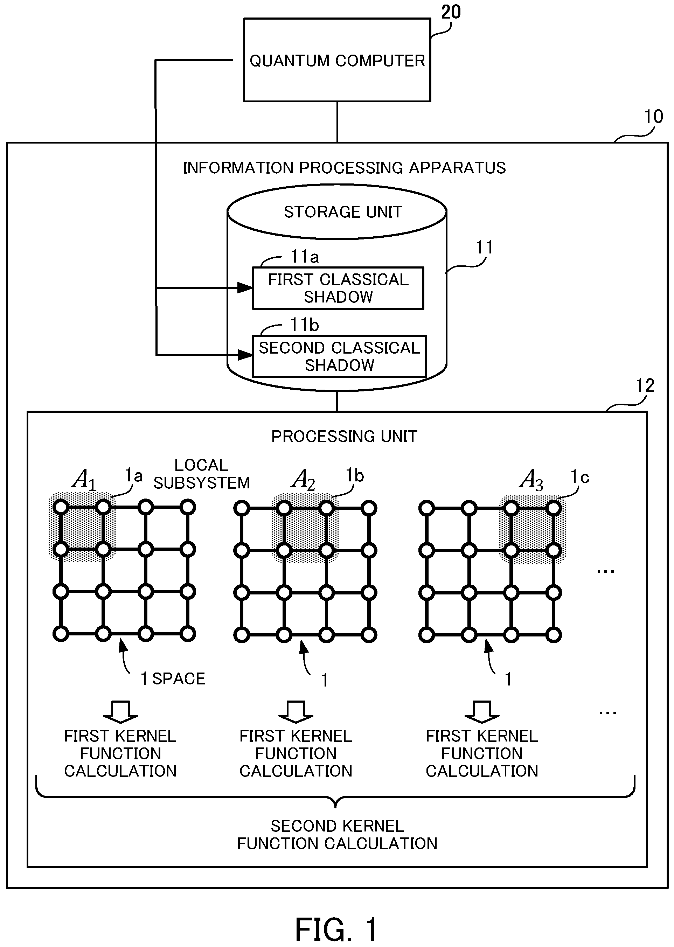

FIG. 1 is a diagram for describing an information processing apparatus according to the first embodiment. The information processing apparatus 10 is used for machine learning based on quantum data. The quantum data is data represented by a plurality of qubits. The information processing apparatus 10 is connected to a quantum computer 20. The quantum computer 20 performs quantum operations based on quantum circuits. The quantum computer 20 performs the quantum operations on qubits.

The information processing apparatus 10 includes a storage unit 11 and a processing unit 12. The storage unit 11 may be a volatile semiconductor memory such as a random access memory (RAM) or a non-volatile storage such as a hard disk drive (HDD) or a flash memory. The processing unit 12 is, for example, a processor such as a central processing unit (CPU), a graphics processing unit (GPU), or a digital signal processor (DSP). However, the processing unit 12 may include a special-purpose electronic circuit such as an application specific integrated circuit (ASIC) or a field programmable gate array (FPGA). The processor executes a program stored in a memory (or the storage unit 11) such as a RAM. A set of a plurality of processors may be referred to as a "multiprocessor" or simply as a "processor".

Here, as types of quantum kernel methods, a shadow kernel method, a projected kernel method, and other methods are known. For example, the shadow kernel method is a technique in which classical shadows of quantum data are obtained on the quantum computer 20, and then values of a kernel function between the classical shadows are calculated on a classical computer. A classical shadow is data that is a combination of a measurement result of a quantum state ρ in a random basis and the basis. The use of classical shadows makes it possible to efficiently approximate specific properties of quantum states.

The kernel function used in the shadow kernel method is referred to as a shadow kernel. The shadow kernel k_{shadow} between classical shadows corresponding to quantum data ρ and ρ̃ is expressed by Equation (1). ${k}_{shadow} \left(ρ, {ρ}^{˜}\right) = exp \left[\frac{τ}{{T}^{2}}{\sum }_{t , t ′ = 1}^{T} exp \left(\frac{γ}{n}{\sum }_{i = 1}^{n} tr \left({σ}_{i}^{\left(t\right)}{{σ}^{˜}}_{i}^{\left(t′\right)}\right)\right)\right]$ (1)

The classical shadow corresponding to the quantum data ρ is {σᵢ^{(t)}}. The classical shadow corresponding to the quantum data ρ̃ is {σ̃ᵢ^{(t')}}. Here, n denotes the number of qubits included in the quantum data. A record {σ₁⁽¹⁾, σᵢ⁽²⁾, ..., σᵢ^{(T)}} is a data element of the classical shadow corresponding to the i-th qubit of the quantum data ρ. T denotes the maximum number of times for measuring qubits. Each of σ₁⁽¹⁾, σᵢ⁽²⁾, ..., σᵢ^{(T)} is a matrix with two rows and two columns. τ and γ are real-valued hyperparameters. Note that σᵢ is obtained as follows.

First, the quantum computer 20 prepares the quantum data ρ on the quantum computer 20. Next, the quantum computer 20 measures each qubit of ρ in a randomly selected basis from X, Y, and Z. More specifically, the quantum computer 20 applies a quantum gate randomly selected from {I, H, HS^{†}} to each qubit of ρ. I denotes an identity gate. H denotes a Hadamard gate. S denotes a phase gate. Here, the quantum gate applied to the i-th qubit is denoted by Uᵢ. The quantum computer 20 then measures all qubits in the Z basis. The state of the i-th qubit projected thereby is denoted by |bᵢ〉. Then, σᵢ is expressed by Equation (2). ${σ}_{i} = 3 {U}_{i}^{†} \left|{b}_{i}\right〉 \left〈{b}_{i}\right| {U}_{i} - I$ (2)

In Equation (2), I denotes an identity matrix with 2 rows and 2 columns. The quantum computer 20 repeats the above operation on ρ T times. σᵢ obtained in the t-th measurement is denoted by σᵢ^{(t)}.

The feature space of a shadow kernel includes reduced density matrices of arbitrary order for arbitrary subspaces. Therefore, it is possible to learn nonlinear properties of a quantum state. Further, in the shadow kernel method, information is first reduced to classical approximations, and then the shadow kernel is calculated. Therefore, the vanishing similarity issue may be avoided in some cases.

However, in techniques such as the shadow kernel method and the projected kernel method, the dimensionality of the feature space becomes exceedingly large as the number of qubits increases. Therefore, the number of pieces of training data needed for generalization increases with the number of qubits. Here, one promising application of the quantum computer 20 is materials science. In many materials, due to the locality of quantum states, the correlation function decays exponentially as the distance between lattice points in a space increases. Therefore, the information processing apparatus 10 calculates a kernel function, focusing on the locality of quantum data. In addition to materials science, the functions of the information processing apparatus 10 are also applicable to local pattern recognition, local error detection, and others in, for example, images, videos, quantum data output from the quantum computer 20, and others.

First, the processing unit 12 acquires the data of a first classical shadow 11a corresponding to first quantum data represented by a plurality of qubits and the data of a second classical shadow 11b corresponding to second quantum data represented by the plurality of qubits. The processing unit 12 is able to acquire the data of the first classical shadow 11a and the data of the second classical shadow 11b from the quantum computer 20. The first classical shadow 11a includes a plurality of first data elements corresponding to the plurality of qubits. For example, the first data element corresponding to the i-th qubit is {σᵢ⁽¹⁾, σᵢ⁽²⁾, ..., σᵢ^{(T)}}. The second classical shadow 11b includes a plurality of second data elements corresponding to the plurality of qubits. For example, the second data element corresponding to the i-th qubit is {σ̃ᵢ⁽¹⁾, σ̃ᵢ⁽²⁾, ..., σ̃ᵢ^{(T)}}.

The processing unit 12 stores the data of the first classical shadow 11a and the data of the second classical shadow 11b in the storage unit 11. The storage unit 11 stores the data of the first classical shadow 11a and the data of the second classical shadow 11b.

The processing unit 12 sets a plurality of local subsystems 1a, 1b, 1c, ... each of which is a set of local lattice points in a space 1 having a plurality of lattice points corresponding respectively to the plurality of qubits. In one example, the space 1 has a two-dimensional square lattice where the plurality of lattice points are mapped in advance to the plurality of qubits on a one-to-one basis. A set A_{GL} of the local subsystems is defined by Equation (3). ${A}_{GL} = \left\{{A}_{1}, {A}_{2}, ⋯\right\}$ (3)

The local subsystems 1a, 1b, 1c, ... are examples of local subsystems identified by identifiers A₁, A₂, A₃, .... For example, each of the local subsystems 1a, 1b, 1c, ... is a square region including two lattice points on one side. In this case, one local subsystem has four lattice points. For example, the processing unit 12 is able to define the local subsystems 1a, 1b, 1c, ... by shifting the square region, one lattice point at a time, along a side of the two-dimensional square lattice. The union of the local subsystems 1a, 1b, 1c, ... corresponds to the entire lattice points of the space 1. The local subsystems may be referred to as "local subspaces". In addition, the geometric structure of the lattice points included in the space 1 may be a structure indicating the spatial arrangement or the like of constituent particles such as atoms and molecules other than the two-dimensional square lattice. For example, the geometric structure of the lattice points included in the space 1 may be a one-dimensional chain, a three-dimensional cubic lattice, or the like. A one-dimensional chain is also regarded as a one-dimensional lattice.

Among the plurality of first data elements included in the first classical shadow 11a and the plurality of second data elements included in the second classical shadow 11b, the processing unit 12 identifies first data elements and second data elements corresponding to lattice points belonging to a local subsystem. "The first data elements and the second data elements corresponding to lattice points belonging to a local subsystem" may also be regarded as "the first data elements and the second data elements corresponding to qubits mapped to lattice points belonging to a local subsystem". The processing unit 12 calculates, for each of the plurality of local subsystems, a value of a first kernel function based on the first data elements and the second data elements identified for that local subsystem.

For example, the processing unit 12 calculates a shadow kernel for each of the local subsystems 1a, 1b, 1c, ... as the first kernel function. A shadow kernel k_{A} for a local subsystem A is expressed by Equation (4). ${k}_{A} \left({ρ}_{A}, {{ρ}^{˜}}_{A}\right) = exp \left[\frac{τ}{{T}^{2}}{\sum }_{t , t ′ = 1}^{T} exp \left(\frac{γ}{\left|A\right|}{\sum }_{i ∈ A} tr \left({σ}_{i}^{\left(t\right)}{{σ}^{˜}}_{i}^{\left(t′\right)}\right)\right)\right]$ (4)

|A| denotes the number of qubits included in the local subsystem A. In the example of Equation (4), the first data element corresponding to a lattice point belonging to the local subsystem A is {σᵢ⁽¹⁾, σᵢ⁽²⁾, ..., σᵢ^{(T)}} for i identifying the qubit mapped to that lattice point belonging to the local subsystem A. The second data element corresponding to a lattice point belonging to the local subsystem A is {σ̃ᵢ⁽¹⁾, σ̃₁⁽²⁾, ..., σ̃ᵢ^{(T)}} for i identifying the qubit mapped to that lattice point belonging to the local subsystem A. The first kernel function is not limited to a shadow kernel, but may be a fidelity kernel, a projected kernel, or the like. A fidelity kernel of quantum states ρ and ρ̃ is defined as their inner product tr(ρρ̃). For a projected kernel, reference may be made to the aforementioned document "Power of data in quantum machine learning".

Then, the processing unit 12 calculates a value of a second kernel function corresponding to the first classical shadow 11a and the second classical shadow 11b, based on a plurality of values of the first kernel function corresponding respectively to the plurality of local subsystems. For example, the second kernel function is referred to as a geometrically local quantum kernel (GLQK) and is denoted as k_{GL}. k_{GL} is expressed by Equation (5). ${k}_{GL} \left(ρ, {ρ}^{˜}\right) = f \left(\left\{{k}_{A}\left({ρ}_{A}, {{ρ}^{˜}}_{A}\right)\left|A∈{A}_{GL}\right.\right\}\right)$ (5)

f denotes a general function consisting of addition and multiplication. General functions include, for example, infinite series such as polynomials and exponential functions. k_{A} is the first kernel function. An example of k_{GL} is Equation (6) that is a power of the sum of values of the first kernel function. ${k}_{GL} \left(ρ, {ρ}^{˜}\right) = {\left[\frac{1}{\left|{A}_{GL}\right|}{\sum }_{A ∈ {A}_{GL}} {k}_{A} \left({ρ}_{A}, {{ρ}^{˜}}_{A}\right)\right]}^{h}$ (6)

|A_{GL}| denotes the total number of local subsystems A₁, A₂, ... included in the set A_{GL} of local subsystems. h is an integer hyperparameter. In machine learning using k_{GL} expressed by Equation (6), it is possible to learn local features determined from k_{A} up to the h-th power. The processing unit 12 applies the second kernel function to machine learning.

The processing unit 12 calculates a value of the second kernel function for each pair of classical shadows among a plurality of classical shadows corresponding to a plurality of quantum data including the first quantum data and the second quantum data. For example, the processing unit 12 acquires the data of a plurality of classical shadows for a plurality of quantum data included in a dataset, and calculates a GLQK value for each pair of classical shadows. Using the values of the second kernel function calculated for the respective pairs of classical shadows, the processing unit 12 creates, by machine learning, a model that outputs a predicted value in response to an input classical shadow. For the machine learning, for example, a machine learning algorithm based on a kernel method such as regression analysis or a support vector machine is used. The model may be referred to as a trained model, an artificial intelligence (AI) model, a machine learning model, a prediction model, or another.

The processing unit 12 calculates the accuracy of predicted values outputted by the model obtained through the machine learning. The processing unit 12 performs an inference process on validation data using the model obtained by performing the machine learning using training data, and calculates the accuracy of the output predicted values. For example, the processing unit 12 calculates the accuracy of the predicted values by cross-validation using a plurality of classical shadows corresponding to a plurality of quantum data.

In the cross-validation, the processing unit 12 randomly divides the plurality of classical shadows into k blocks. The processing unit 12 performs machine learning using k - 1 blocks as training data. The processing unit 12 performs an inference process using the model obtained by the machine learning, using the remaining one block, which is not used as the training data, as validation data, and calculates the accuracy of the output predicted values. For each of k patterns of selecting the validation data, the processing unit 12 performs the machine learning and the inference process and calculates the accuracy of the predicted values. The processing unit 12 calculates the average value of the accuracies for the k patterns as the accuracy of the model.

The processing unit 12 changes the hyperparameters of the model based on the accuracy of the predicted values. The hyperparameters of the model include hyperparameters of the first kernel function and the second kernel function. For example, the processing unit 12 changes the hyperparameters of the first kernel function and the second kernel function by a grid search based on the accuracy of the predicted values. The hyperparameters of the model also include a method of defining the local subsystems 1a, 1b, 1c, ....

The processing unit 12 changes the lattice points included in the local subsystems 1a, 1b, 1c, ... based on the accuracy of the predicted values outputted by the model. That is, the processing unit 12 changes the size and shape of the local subsystems 1a, 1b, 1c, ... on the basis of the accuracy of the predicted values outputted by the model. The processing unit 12 increases the size of the local subsystems if the accuracy of the predicted values outputted by the model is lower than a threshold. For example, the processing unit 12 sets the initial size of the square local subsystems 1a, 1b, 1c, ... to one, which is the minimum number of lattice points included in one side. If the accuracy of the predicted values is lower than the threshold, the processing unit 12 expands the local subsystems 1a, 1b, 1c, ... in the vertical direction and the horizontal direction, thereby increasing the number of lattice points included in both the vertical and horizontal sides of the local subsystems 1a, 1b, 1c, .... The processing unit 12 may increase the number of lattice points included in either one of the vertical side or the horizontal side.

For example, in the case where it is known that the correlation in a specific direction of each lattice point in the space 1 is relatively strong, the local subsystems 1a, 1b, 1c, ... may be expanded only in that direction. In changing the size of the local subsystems 1a, 1b, 1c, ..., the processing unit 12 may expand the local subsystems 1a, 1b, 1c, ... in a specific direction. Furthermore, the processing unit 12 may adaptively change the shape of the local subsystems in such a manner that, if an expansion only in a specific direction does not sufficiently improve the prediction accuracy of the trained model, the processing unit 12 expands the local subsystems in another direction.

The processing unit 12 performs the machine learning of the model based on the changed hyperparameters. For example, the processing unit 12 iteratively performs the above-described machine learning and changes the hyperparameters until the accuracy of predicted values becomes equal to or higher than the threshold. Even when the accuracy of the predicted values has reached the threshold, the processing unit 12 may search for hyperparameters that further improve the accuracy.

According to the first embodiment, the processing unit 12 of the information processing apparatus 10 acquires the data of the first classical shadow 11a corresponding to the first quantum data represented by a plurality of qubits and the data of the second classical shadow 11b corresponding to the second quantum data represented by the plurality of qubits. The processing unit 12 sets a plurality of local subsystems 1a, 1b, 1c, ..., each of which is a set of local lattice points in the space 1 having a plurality of lattice points corresponding to the plurality of qubits.

The processing unit 12 calculates, for each of the plurality of local subsystems 1a, 1b, 1c, ..., a value of the first kernel function based on first data elements and second data elements corresponding to lattice points belonging to that local subsystem among a plurality of first data elements and a plurality of second data elements. The plurality of first data elements are included in the first classical shadow 11a and correspond to the plurality of qubits. The plurality of second data elements are included in the second classical shadow and correspond to the plurality of qubits. The processing unit 12 calculates a value of the second kernel function corresponding to the first classical shadow 11a and the second classical shadow 11b based on the plurality of values of the first kernel function corresponding to the plurality of local subsystems 1a, 1b, 1c, ....

Accordingly, the information processing apparatus 10 is able to extract local features of quantum data and perform efficient training. Therefore, the information processing apparatus 10 is able to reduce the number of pieces of training data used for machine learning.

The processing unit 12 calculates a value of the second kernel function for each pair of classical shadows among a plurality of classical shadows corresponding to a plurality of quantum data including the first quantum data and the second quantum data. The processing unit 12 performs machine learning of a model that outputs a predicted value in response to an input classical shadow, using the values of the second kernel function calculated for the respective pairs of classical shadows. The processing unit 12 changes the hyperparameters of the model based on the accuracy of the predicted values, and performs the machine learning of the model based on the changed hyperparameters. Accordingly, the information processing apparatus 10 is able to improve the accuracy of the model.

The processing unit 12 changes the lattice points included in the local subsystems based on the accuracy of the predicted values outputted by the model. Accordingly, the information processing apparatus 10 is able to appropriately determine the size and shape of the local subsystems 1a, 1b, 1c, ....

If the accuracy of the predicted values outputted by the model is lower than the threshold, the processing unit 12 increases the size of the local subsystems 1a, 1b, 1c, .... Accordingly, the information processing apparatus 10 is able to appropriately determine the size of the local subsystems 1a, 1b, 1c, ....

The processing unit 12 calculates the accuracy of the predicted values by cross-validation using a plurality of classical shadows corresponding to a plurality of quantum data. Accordingly, the information processing apparatus 10 is able to perform the machine learning even with a small number of pieces of data.

### [Second Embodiment]

Next, a second embodiment will be described.

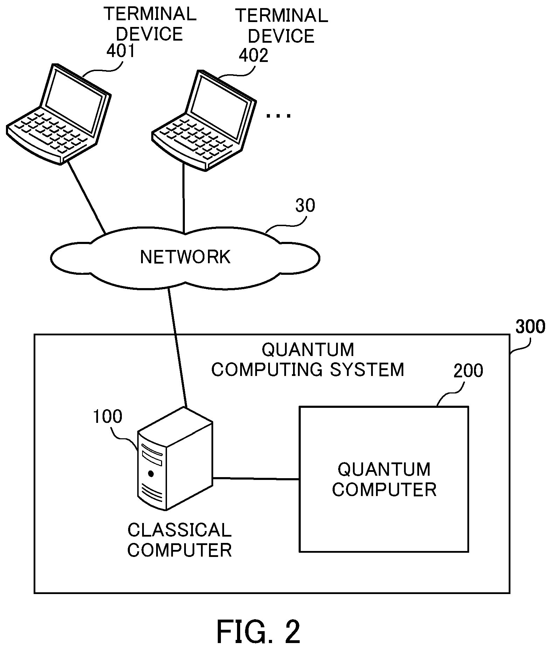

FIG. 2 illustrates an example of a quantum computing system according to the second embodiment. A quantum computing system 300 is a computer system using a quantum device. The quantum computing system 300 includes a classical computer 100 and a quantum computer 200. Terminal devices 401, 402, ... are connected to the classical computer 100 via a network 30. The terminal devices 401, 402, ... are computers that are operated by users who use the quantum computing system 300. The classical computer 100 receives computing requests including quantum circuits from the terminal devices 401, 402, .... A quantum circuit represents a sequence of operations to be performed on qubits, using an arrangement of elements such as quantum gates. A qubit is a bit capable of representing a superposition state of the "0" state and the "1" state.

The classical computer 100 instructs the quantum computer 200 to perform quantum computations in accordance with the quantum circuits received from the terminal devices 401, 402, .... The classical computer 100 acquires the measurement results of qubits from the quantum computer 200. The classical computer 100 is an example of the information processing apparatus 10.

The quantum computer 200 includes a plurality of qubits and an apparatus for operating the plurality of qubits. The plurality of qubits in the quantum computer 200 are, for example, superconducting qubits, trapped-ion qubits, diamond spin qubits, or others. The quantum computing system 300 may include a plurality of quantum computers including the quantum computer 200.

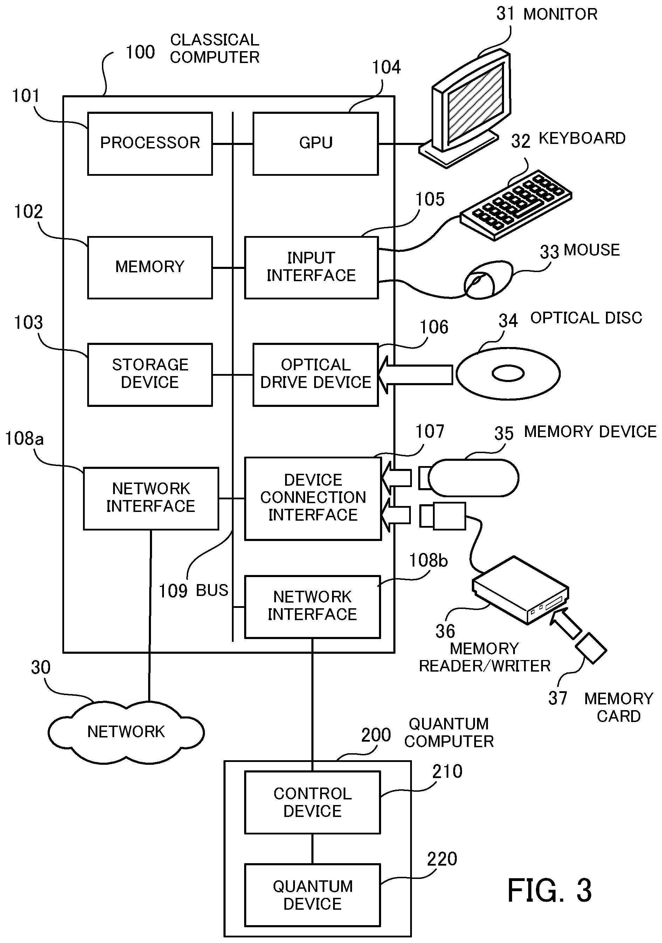

FIG. 3 illustrates an example of hardware of the quantum computing system. The classical computer 100 is entirely controlled by a processor 101. A memory 102 and a plurality of peripheral devices are connected to the processor 101 via a bus 109. The processor 101 may be a multiprocessor. The processor 101 may be, for example, a CPU, a micro processing unit (MPU), or a DSP. At least a part of the functions implemented by the processor 101 executing a program may be implemented by an electronic circuit such as an ASIC or a programmable logic device (PLD). Among a plurality of processes performed by the classical computer 100, a certain process and another process may be performed by different processors. Some or all of the processes described below may be performed in parallel by using a plurality of processors or processor cores. The processor 101 may be referred to as "processor circuitry". The processor 101 is an example of the processing unit 12 of the first embodiment.

The memory 102 is used as a main storage device of the classical computer 100. The memory 102 temporarily stores at least part of operating system (OS) programs and application programs to be executed by the processor 101. The memory 102 also stores various data to be used by the processor 101 during its processing. A volatile semiconductor storage device such as RAM is used as the memory 102.

The peripheral devices connected to the bus 109 include a storage device 103, a GPU 104, an input interface 105, an optical drive device 106, a device connection interface 107, and network interfaces 108a and 108b.

The storage device 103 electrically or magnetically writes data to and reads data from a built-in storage medium. The storage device 103 is used as an auxiliary storage device of the classical computer 100. The storage device 103 stores OS programs, application programs, and various data. The storage device 103 may be, for example, an HDD or a solid state drive (SSD). The memory 102 or the storage device 103 is an example of the storage unit 11 in the first embodiment.

The GPU 104 is an arithmetic device that performs image processing. The GPU 104 is an example of a graphic controller. A monitor 31 is connected to the GPU 104. The GPU 104 displays images on the screen of the monitor 31 in accordance with instructions from the processor 101. The monitor 31 may be a display device using an organic electro luminescence (EL), a liquid crystal display device, or another.

A keyboard 32 and a mouse 33 are connected to the input interface 105. The input interface 105 transmits signals received from the keyboard 32 and the mouse 33 to the processor 101. The mouse 33 is an example of a pointing device, and other pointing devices may be used. Other pointing devices include a touch panel, a tablet, a touch pad, and a trackball.

The optical drive device 106 reads data recorded on an optical disc 34 or writes data to the optical disc 34 by using laser light or the like. The optical disc 34 is a portable storage medium on which data is recorded so as to be readable by reflection of light. The optical disc 34 may be a digital versatile disc (DVD), a DVD-RAM, a compact disc read only memory (CD-ROM), a CD-recordable (CD-R), a CD-rewritable (CD-RW), or another.

The device connection interface 107 is a communication interface for connecting peripheral devices to the classical computer 100. For example, a memory device 35 and a memory reader/writer 36 may be connected to the device connection interface 107. The memory device 35 is a storage medium having a function for communication with the device connection interface 107. The memory reader/writer 36 is a device for writing data to a memory card 37 or reading data from the memory card 37. The memory card 37 is a card type storage medium.

The network interface 108a is connected to the network 30. The network interface 108a transmits data to and receives data from other computers and communication devices via the network 30. The network interface 108a is, for example, a wired communication interface connected to a wired communication device such as a switch or a router via a cable. Alternatively, the network interface 108a may be a wireless communication interface connected to a wireless communication device such as a base station or an access point by radio waves.

The network interface 108b is an interface for connection to the quantum computer 200. The processor 101 transmits a quantum circuit to the quantum computer 200 via the network interface 108b and causes the quantum computer 200 to perform the quantum computation. The processor 101 acquires a result of the quantum computation via the network interface 108b.

The classical computer 100 is able to implement the processing functions of the second embodiment with the hardware described above. The apparatus described in the first embodiment is also implemented with the same hardware as the classical computer 100 illustrated in FIG. 3.

The classical computer 100 implements the processing functions of the second embodiment by, for example, executing a program recorded on a computer-readable storage medium. The program describing the processing contents to be executed by the classical computer 100 may be recorded on various storage media. For example, a program to be executed by the classical computer 100 may be stored in the storage device 103. The processor 101 loads at least part of the program from the storage device 103 into the memory 102 and executes the program. The program to be executed by the classical computer 100 may be recorded on a portable storage medium such as the optical disc 34, the memory device 35, or the memory card 37. The program stored on the portable storage medium becomes executable after being installed in the storage device 103 under the control of the processor 101, for example. Alternatively, the processor 101 may directly read the program from the portable storage medium and execute the program.

The quantum computer 200 includes a control device 210 and a quantum device 220. The control device 210 performs gate operations on qubits provided in the quantum device in accordance with a quantum circuit. The quantum device 220 includes a plurality of qubits. The quantum device 220 is, for example, one quantum processing unit (QPU) or a plurality of QPUs.

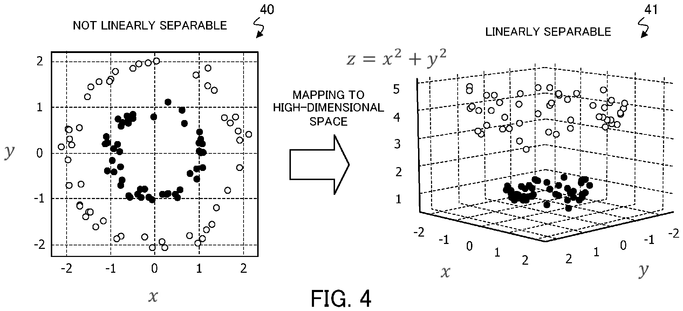

FIG. 4 illustrates an example of mapping data to a high-dimensional feature space. In the case of solving a nonlinear problem by a machine learning technique, data is mapped to a high-dimensional feature space and a linear problem is solved in the feature space, thereby solving the nonlinear problem in the original space.

For example, a graph 40 represents data plotted with respect to two features x and y. The data plotted as black dots are classified into one class. The data plotted as white dots are classified into another class. However, the black dots and the white dots in the graph 40 are not classifiable with a linear function. That is, the black dots and the white dots in the graph 40 are not linearly separable.

On the other hand, a graph 41 represents data plotted with respect to three features x, y, and z. Here, z = x² + y². The black dots and the white dots in the graph 41 are classifiable by a plane. That is, the black dots and the white dots in the graph 41 are linearly separable. In this way, it is possible to solve a nonlinear problem in the original feature space by solving a linear problem in a higher-dimensional feature space than the original feature space.

Note, however, that explicitly handling high-dimensional features may increase the computational cost. To address this, the classical computer 100 performs machine learning computation using a kernel method, without actually mapping data into a high-dimensional feature space.

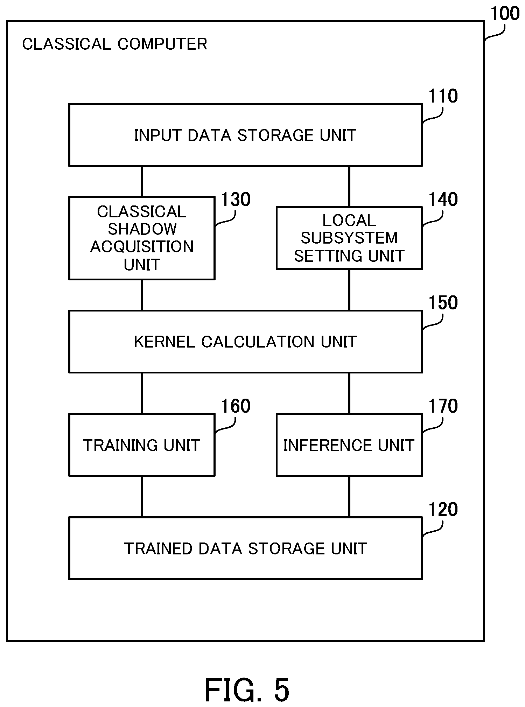

FIG. 5 illustrates an example of functions of the classical computer. The classical computer 100 includes an input data storage unit 110, a trained data storage unit 120, a classical shadow acquisition unit 130, a local subsystem setting unit 140, a kernel calculation unit 150, a training unit 160, and an inference unit 170.

The input data storage unit 110 stores various data inputted to the classical computer 100. The data stored in the input data storage unit 110 includes information that maps each qubit in quantum data to a lattice point in a space. The space has, for example, a geometric structure such as a one-dimensional chain, a two-dimensional square lattice, or a three-dimensional cubic lattice, which represent a spatial arrangement of constituent particles such as atoms and molecules in a molecule or a solid. The lattice points in the space mapped to the qubits are, for example, lattice points in a lattice such as a one-dimensional chain, a two-dimensional square lattice, or a three-dimensional cubic lattice. The data stored in the input data storage unit 110 includes classical shadows corresponding to quantum data, acquired using the quantum computer 200.

The trained data storage unit 120 stores trained data obtained by the training unit 160. The trained data includes information on a trained model trained by the training unit 160.

The classical shadow acquisition unit 130 acquires the data of classical shadows corresponding to quantum data using the quantum computer 200 and stores the data in the input data storage unit 110. Each of the plurality of qubits representing the quantum data is previously mapped to a lattice point in the space.

During training, the classical shadow acquisition unit 130 acquires, for each piece of quantum data in a training quantum dataset, the data of a classical shadow to be used as training data and validation data. For example, in a regression analysis problem, the classical shadow acquisition unit 130 acquires data including a plurality of classical shadows and values of predetermined physical quantities in quantum states corresponding to the respective classical shadows. At the time of inference, the classical shadow acquisition unit 130 acquires the data of a classical shadow corresponding to quantum data that is a prediction target.

The local subsystem setting unit 140 sets local subsystems in the space having lattice points corresponding to the respective qubits. As will be described later, the local subsystem setting unit 140 adaptively determines the size and shape of the local subsystems according to the prediction accuracy of a trained model.

The kernel calculation unit 150 calculates, for each pair of classical shadows, a GLQK with respect to the set local subsystems. At the time of training, the kernel calculation unit 150 calculates the GLQK for each pair of classical shadows among a plurality of classical shadows acquired during the training. At the time of inference, the kernel calculation unit 150 calculates a GLQK for each pair of a classical shadow serving as a prediction target and each classical shadow used as training data for generating a final trained model. The kernel calculation unit 150 performs a grid search for a combination of optimal hyperparameters of the kernel function in the local subsystems and the GLQK.

The training unit 160 performs machine learning with a predetermined machine learning algorithm using the GLQKs calculated for the respective pairs of classical shadows, to thereby create a trained model to be used for inference. As the machine learning algorithm, for example, an algorithm based on a kernel method such as kernel ridge regression may be used. By the machine learning, the training unit 160 determines the values of the parameters in the trained model. The training unit 160 stores information on the trained model including the determined values of the parameters, as trained data in the trained data storage unit 120.

Here, the local subsystem setting unit 140 evaluates the prediction accuracy of the trained model by cross-validation. The local subsystem setting unit 140 updates the size and shape of the local subsystems according to the prediction accuracy, and sets the local subsystems again. Then, the local subsystem setting unit 140 causes the kernel calculation unit 150 to perform the GLQK calculation for training, and also causes the training unit 160 to perform the training again.

In this way, the cycle of updating the local subsystems by the local subsystem setting unit 140, calculating GLQKs by the kernel calculation unit 150, and performing training by the training unit 160 is repeated until the prediction accuracy of the trained model reaches a criterion. When the prediction accuracy of the trained model reaches the criterion, the cycle ends and the creation of the trained model is completed.

The inference unit 170 performs an inference process using the trained model on the basis of GLQKs calculated for respective pairs of a classical shadow serving as a prediction target and a classical shadow used as training data in the generation of the trained model, and outputs a predicted value of a predetermined physical quantity for the classical shadow serving as the prediction target. Note that the inference unit 170 consults the trained data storage unit 120 to acquire the trained model to be used for the inference process.

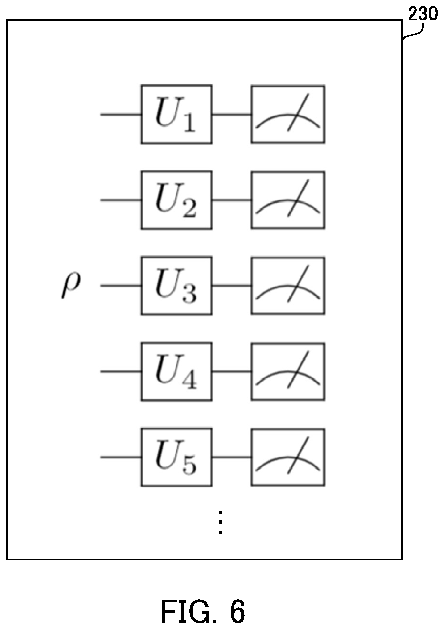

FIG. 6 illustrates an example of a quantum circuit used to acquire a classical shadow. The classical shadow acquisition unit 130 acquires the data of a classical shadow corresponding to quantum data ρ by using the quantum computer 200 as follows. First, the quantum data ρ is prepared on the quantum computer 200. Let n denote the number of qubits in the quantum data.

The quantum computer 200 measures each qubit of the quantum data ρ in a random basis of X, Y, or Z. A quantum circuit 230 is an example of a quantum circuit used to acquire a classical shadow corresponding to the quantum data ρ in the quantum computer 200. The quantum computer 200 applies a quantum gate Uᵢ randomly selected from {I, H, HS^{†}} to each qubit of the quantum data ρ. The quantum computer 200 measures all qubits in the Z basis.

In the case where a quantum gate Uᵢ applied to a qubit is {I}, the measurement result of the qubit in the Z basis represents a measurement result in the Z basis before the application of the quantum gate Uᵢ to the qubit. In the case where the quantum gate Uᵢ applied to a qubit is {H}, the measurement result of the qubit in the Z basis represents a measurement result in the X basis before the application of the quantum gate Uᵢ to the qubit. In the case where the quantum gate Uᵢ applied to a qubit is {HS^{†}}, the measurement result of the qubit in the Z basis represents a measurement result in the Y basis before the application of the quantum gate Uᵢ to the qubit. Let |bᵢ〉 denote the state of the i-th qubit projected by the Z-basis measurement. Then, the quantum computer 200 obtains σᵢ of Equation (2) for each i.

The quantum computer 200 repeats the above operation for the quantum data ρ T times. T is referred to as the number of classical shadow shots. A classical shadow obtained in the t-th measurement is denoted as σᵢ^{(t)}. Then, the quantum computer 200 transmits the data of the classical shadow {σᵢ^{(t)}} (i = 1 to n, t = 1 to T) for the quantum data ρ to the classical computer 100. The classical shadow acquisition unit 130 acquires the data of the classical shadow {σᵢ^{(t)}} received from the quantum computer 200. Here, the quantity given in Equation (7) coincides with a reduced density matrix of the original quantum state ρ on the subsystem {i₁, ..., iᵣ} at the limit of T → ∞. r denotes the number of qubits included in a subsystem. ${σ}_{\left\{{i}_{1}, ⋯, {i}_{r}\right\}} = \frac{1}{T} {\sum }_{t = 1}^{T} {σ}_{{i}_{1}}^{\left(t\right)} ⊗ ⋯ ⊗ {σ}_{{i}_{r}}^{\left(t\right)}$ (7)

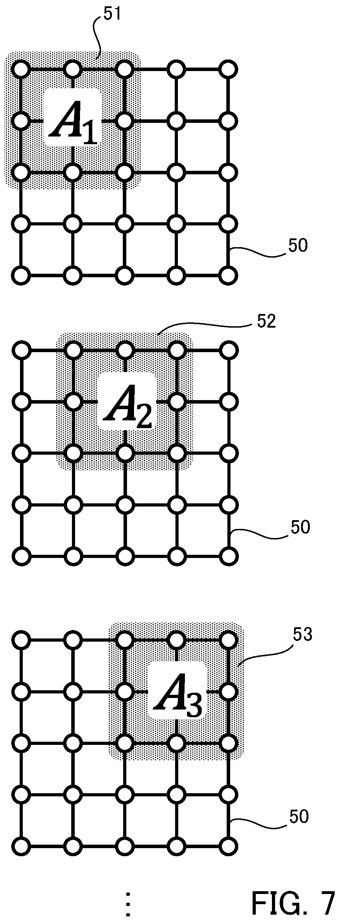

FIG. 7 illustrates examples of local subsystems. The local subsystem setting unit 140 sets a set of local subsystems A_{GL} = {A₁, A₂, A₃, ...} in a space having lattice points corresponding to qubits. As an example, FIG. 7 illustrates local subsystems 51, 52, 53, ... defined in a two-dimensional square lattice 50. The local subsystems 51, 52, 53, ... are examples of local subsystems identified by identifiers A₁, A₂, A₃, ..., respectively. The local subsystems may also be referred to local subspaces.

The local subsystem setting unit 140 determines the range and shape, that is, the size of the local subsystems according to the characteristics of data to be learned. For example, the shape of the local subsystems may be rectangular in the two-dimensional square lattice 50. The local subsystem setting unit 140 may adaptively change the range and shape of the local subsystems so as to reduce training error and validation error.

Note that the geometric structure of a space corresponds to a spatial arrangement of, for example, constituent particles such as atoms and molecules in a material. The geometric structure of the space may be a structure other than a two-dimensional square lattice, such as a one-dimensional chain, a three-dimensional cubic lattice, a face-centered cubic lattice, a body-centered cubic lattice, or a hexagonal close-packed structure. The geometric structure in a material significantly affects the properties of the material. Therefore, by incorporating information on a geometric structure into a machine learning model, the training accuracy is expected to be improved. In particular, in many materials, the correlation function decays exponentially as the distance between lattice points in a space increases. To address this, by focusing on local subsystems in the space, it becomes possible to efficiently learn the properties of the material.

Note that, in addition to the above example, the functions of the classical computer 100 are also applicable to local pattern recognition and local error detection in, for example, images, videos, and quantum data output from a quantum computer.

Next, GLQK will be described. The kernel calculation unit 150 calculates a kernel function k_{A} for each local subsystem with respect to the classical shadows of two pieces of quantum data ρ and ρ̃. The kernel calculation unit 150 calculates GLQK, which is a general function including addition and multiplication using the kernel function k_{A} in each local subsystem, as given by Equation (5). The kernel function k_{A} in a local subsystem is an example of the first kernel function described in the first embodiment. GLQK is an example of the second kernel function described in the first embodiment.

In the case where the correlation function decays exponentially, the expectation value of a physical quantity acting on a small number of qubits is expressed as a polynomial of local physical quantity expectation values. For example, in the case where the spatial regions where physical quantities Aⱼ and Bₖ act are far apart, the correlation function between Aⱼ and Bₖ satisfies <AⱼBₖ> ≈ <Aⱼ><Bₖ>. In the case where the spatial regions where the physical quantities Aⱼ and Bₖ act are close to each other, the correlation function <AⱼBₖ> itself is a local physical quantity expectation value. Here, Aⱼ is an operator acting on the j-th qubit, and Bₖ is an operator acting on the k-th qubit.

Here, a feature vector φ_{GL} of GLQK is expressed by Equation (8). ${ϕ}_{GL} \left(ρ\right) = f \left(\left\{{ϕ}_{A}\left({ρ}_{A}\right)\left|A∈{A}_{GL}\right.\right\}\right)$ (8)

φ_{A} is a feature vector of the kernel function k_{A} in the local subsystem A. In the case where f is a polynomial, for example, GLQK is expressed by Equation (9). ${k}_{GL} \left(ρ, {ρ}^{˜}\right) = k \left({ρ}_{a}, {{ρ}^{˜}}_{a}\right) k \left({ρ}_{b}, {{ρ}^{˜}}_{b}\right) + k \left({ρ}_{c}, {{ρ}^{˜}}_{c}\right) k \left({ρ}_{d}, {{ρ}^{˜}}_{d}\right)$ (9)

Each of a, b, c, and d denotes a local subsystem. The feature vector of the kernel function in each of the local subsystems a, b, c, and d is expressed by Equation (10). $ϕ \left({ρ}_{a}\right) = \left(\begin{matrix}{a}_{1} \\ {a}_{2}\end{matrix}\right) , ϕ \left({ρ}_{b}\right) = \left(\begin{matrix}{b}_{1} \\ {b}_{2}\end{matrix}\right) , ϕ \left({ρ}_{c}\right) = \left(\begin{matrix}{c}_{1} \\ {c}_{2}\end{matrix}\right) , ϕ \left({ρ}_{d}\right) = \left(\begin{matrix}{d}_{1} \\ {d}_{2}\end{matrix}\right)$ (10)

Here, in the function of the feature vectors, addition and multiplication in the function f are replaced with a direct sum and a tensor product, respectively. The feature vector φ_{GL} of GLQK using the kernel functions in the respective local subsystems a, b, c, and d is expressed by Equation (11). ${ϕ}_{GL} \left(ρ\right) = \left(\begin{matrix}{a}_{1} \\ {a}_{2}\end{matrix}\right) ⊗ \left(\begin{matrix}{b}_{1} \\ {b}_{2}\end{matrix}\right) ⊕ \left(\begin{matrix}{c}_{1} \\ {c}_{2}\end{matrix}\right) ⊗ \left(\begin{matrix}{d}_{1} \\ {d}_{2}\end{matrix}\right) = \left(\begin{matrix}{a}_{1} {b}_{1} \\ {a}_{1} {b}_{2} \\ {a}_{2} {b}_{1} \\ {a}_{2} {b}_{2}\end{matrix}\right) ⊕ \left(\begin{matrix}{c}_{1} {d}_{1} \\ {c}_{1} {d}_{2} \\ {c}_{2} {d}_{1} \\ {c}_{2} {d}_{2}\end{matrix}\right) = \left(\begin{matrix}{a}_{1} {b}_{1} \\ {a}_{1} {b}_{2} \\ {a}_{2} {b}_{1} \\ {a}_{2} {b}_{2} \\ {c}_{1} {d}_{1} \\ {c}_{1} {d}_{2} \\ {c}_{2} {d}_{1} \\ {c}_{2} {d}_{2}\end{matrix}\right)$ (11)

According to Equation (11), the feature vector φ_{GL} of GLQK includes a polynomial of local features of the data. By combining the feature vector φ_{GL} of GLQK with the property that a physical quantity expectation value of quantum data having locality is expressed as a polynomial of local physical quantity expectation values, it is expected that the learning of quantum data having locality may be efficiently performed in GLQK.

The following describes a case of using GLQK expressed by Equation (6). For example, the shadow kernel expressed by Equation (4) is used as the kernel function k_{A} in the local subsystem A. The feature vector φ_{A} of the kernel function k_{A} expressed by Equation (4) is expressed by Equation (12). ${ϕ}_{A} = {⊕}_{d = 0}^{∞} \sqrt{\frac{{τ}^{d}}{d !}} {\left({⊕}_{r = 0}^{\left|A\right|}\sqrt{\frac{1}{r !} {\left(\frac{γ}{\left|A\right|}\right)}^{r}}{⊕}_{\left\{{i}_{1}\right\} ⊂ A}⋯{⊕}_{\left\{{i}_{1}\right\} ⊂ A}vec\left[{σ}_{\left\{{i}_{1}, ⋯, {i}_{r}\right\}}\right]\right)}^{⊗ d}$ (12)

{i₁, ..., iᵣ} is a subsystem of the local subsystem A. r denotes the number of qubits included in a subsystem of the local subsystem A. The feature vector φ_{A} expressed by Equation (12) includes a tensor product of σ_{{i_1}, ..., _{i_r}} estimated from the classical shadow. Here, "i _1" indicates i₁. σ_{{i_1}, ..., _{i_r}} corresponds to a reduced density matrix on the subsystem {i₁, ..., iᵣ} ⊂ A of the local subsystem A. Therefore, the feature vector φ_{A} includes all nonlinear features (arbitrary powers of linear features) of the local subsystem A. With machine learning using the kernel function k_{A} expressed by Equation (4) and the GLQK expressed by Equation (6), it is possible to learn nonlinear features determined from k_{A} up to the h-th power.

For example, a truncated shadow kernel is used as the kernel function k_{A} in the local subsystem A. The truncated shadow kernel is expressed by Equation (13). ${k}_{A} \left({ρ}_{A}, {{ρ}^{˜}}_{A}\right) = exp \left[\frac{τ}{{T}^{2}}{\sum }_{t , t ′ = 1}^{T} {\prod }_{i ∈ A} \left(1+\frac{γ}{\left|A\right|}tr\left({σ}_{i}^{\left(t\right)}{{σ}^{˜}}_{i}^{\left(t′\right)}\right)\right)\right]$ (13)

The feature vector φ_{A} of the kernel function k_{A} expressed by Equation (13) is expressed by Equation (14). ${ϕ}_{A} = {⊕}_{d = 0}^{∞} \sqrt{\frac{{τ}^{d}}{d !}} {\left({⊕}_{r = 0}^{\left|A\right|}\sqrt{{\left(\frac{γ}{\left|A\right|}\right)}^{r}}{⊕}_{\left\{{i}_{1}, ⋯, {i}_{r}\right\} ⊂ A}vec\left[{σ}_{\left\{{i}_{1}, ⋯, {i}_{r}\right\}}\right]\right)}^{⊗ d}$ (14)

The feature vector φ_{A} expressed by Equation (14) includes a tensor product of σ_{{i_1}, ..., _{i_r}} estimated from the classical shadow. Therefore, the feature vector φ_{A} includes all nonlinear features (arbitrary powers of linear features) of the local subsystem A. With machine learning using the kernel function k_{A} expressed by Equation (13) and the GLQK expressed by Equation (6), it is possible to learn local nonlinear features determined from k_{A} up to the h-th power. Here, since the feature vector φ_{A} expressed by Equation (14) does not include non-physical information, for example, σ_{{1,1}}, it is considered that the efficiency of the machine learning using the kernel function k_{A} expressed by Equation (13) and the GLQK expressed by Equation (6) is high.

For example, a truncated linear shadow kernel is used as the kernel function k_{A} in the local subsystem A. The truncated linear shadow kernel is expressed by Equation (15). ${k}_{A} \left({ρ}_{A}, {{ρ}^{˜}}_{A}\right) = \frac{1}{{T}^{2}} {\sum }_{t , t ′ = 1}^{T} {\prod }_{i ∈ A} \left(1+\frac{γ}{\left|A\right|}tr\left({σ}_{i}^{\left(t\right)}{{σ}^{˜}}_{i}^{\left(t′\right)}\right)\right)$ (15)

The feature vector φ_{A} of the kernel function k_{A} expressed by Equation (15) is expressed by Equation (16). ${ϕ}_{A} = {⊕}_{r = 0}^{\left|A\right|} \sqrt{{\left(\frac{γ}{\left|A\right|}\right)}^{r}} {⊕}_{\left\{{i}_{1}, ⋯, {i}_{r}\right\} ⊂ A} vec \left[{σ}_{\left\{{i}_{1}, ⋯, {i}_{r}\right\}}\right]$ (16)

The feature vector φ_{A} expressed by Equation (16) includes σ_{{i_1}, ..., _{i_r}} estimated from the classical shadow. Therefore, the feature vector φ_{A} includes all linear features (expectation values of linear physical quantities) of the local subsystem A. With machine learning using the kernel function k_{A} expressed by Equation (15) and the GLQK expressed by Equation (6), it is possible to learn local linear features determined from k_{A} up to the h-th power.

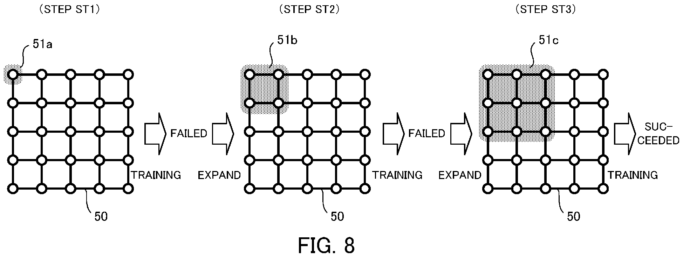

FIG. 8 illustrates an example of adaptive selection of a local subsystem. The local subsystem setting unit 140 executes an adaptive algorithm that adaptively changes the size or shape of local subsystems so as to reduce a validation error with respect to a trained model obtained for local subsystems having a certain size or shape.

By using classical shadows, it becomes possible to calculate GLQK for certain local subsystems on the classical computer 100. Therefore, the adaptive algorithm does not increase the quantum computational cost in the quantum computer 200.

As an example of the adaptive algorithm, "the size of local subsystems is set to be relatively small in the initial stage, and if the validation error exceeds a certain threshold, the size of the local subsystems is increased" or the like is considered.

For example, the local subsystem setting unit 140 determines the size of local subsystems for the two-dimensional square lattice 50 as follows. First, the local subsystem setting unit 140 sets a local subsystem having a minimum size (step ST1). The number of lattice points belonging to the minimum-size local subsystem is one. A local subsystem 51a is an example of such a minimum-size local subsystem.

As a result of training using local subsystems having the size set in step ST1, the local subsystem setting unit 140 detects that the prediction accuracy of a trained model does not satisfy a criterion, that is, that the training has failed. Then, the local subsystem setting unit 140 expands the size of the local subsystem (step ST2). For example, the local subsystem setting unit 140 increases the number of lattice points on each of the vertical side and the horizontal side of the square local subsystem by one. Thus, the number of lattice points on each side of the local subsystem becomes two. The number of lattice points belonging to the local subsystem becomes four. A local subsystem 51b is an example of a local subsystem having four lattice points.

As a result of training using local subsystems having the size set in step ST2, the local subsystem setting unit 140 detects that the training has failed. Then, the local subsystem setting unit 140 expands the size of the local subsystem (step ST3). For example, the local subsystem setting unit 140 increases the number of lattice points on each of the vertical side and the horizontal side of the local subsystem by one. Thus, the number of lattice points on each side of the local subsystem becomes three. The number of lattice points belonging to the local subsystem becomes nine. A local subsystem 51c is an example of a local subsystem having nine lattice points.

Then, as a result of training using local subsystems having the size set in step ST3, the local subsystem setting unit 140 detects that the prediction accuracy of the trained model satisfies the criterion, that is, that the training is successful. Then, the local subsystem setting unit 140 sets the size of local subsystems to the current size, and completes the above cycle.

In this way, the local subsystem setting unit 140 gradually expands the size of the local subsystem from the minimum size until the prediction accuracy of the trained model satisfies the criterion. As a result, the minimum size of the local subsystem within a range in which the prediction accuracy satisfies the criterion is obtained. Note that, the smaller the size of local subsystems is, the fewer the features are, and the smaller the number of pieces of training data for generalization is.

Note that, in changing the size of local subsystems, the local subsystem setting unit 140 may increase the number of lattice points included in all sides representing the shape of a local subsystem, or may increase the number of lattice points included in some of the sides. For example, in the case where it is known that the correlation in a specific direction is relatively strong, the local subsystem setting unit 140 may expand the local subsystems only in that direction. Further, in changing the size of local subsystems, the local subsystem setting unit 140 may adaptively change the shape of the local subsystems. For example, if an expansion in a specific direction fails to sufficiently improve the prediction accuracy of a trained model, the local subsystem setting unit 140 may expand the local subsystems in another direction.

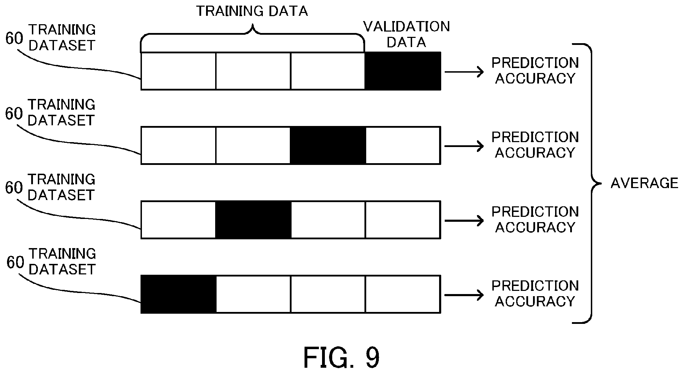

FIG. 9 illustrates an example of cross-validation. The classical computer 100 evaluates the prediction accuracy of a trained model by k-fold cross-validation. In the k-fold cross-validation, the training unit 160 performs machine learning using k - 1 blocks of a dataset, obtained by dividing the dataset into k blocks. The inference unit 170 calculates a prediction accuracy in an inference process using the remaining one block, which is not the training data, as validation data. Then, the local subsystem setting unit 140 calculates the average of the prediction accuracies obtained for each of the k patterns of selecting the validation data, as the prediction accuracy of the trained model. In the example of FIG. 9, k-fold cross-validation with k = 4 will be described.

First, the training unit 160 divides a training dataset 60 into four blocks. The training dataset 60 is data of a plurality of classical shadows acquired from the quantum computer 200 in the training phase. The training unit 160 performs machine learning using three blocks of the training dataset 60 as training data. For example, the training unit 160 generates a trained model that outputs a value of a predetermined physical quantity in response to an input classical shadow, by kernel ridge regression using GLQKs between the pieces of the training data calculated by the kernel calculation unit 150.

The inference unit 170 performs an inference process using the remaining one block of the training dataset 60, which is not used as the training data, as validation data, and calculates the prediction accuracy. For example, the inference unit 170 calculates the mean squared error between the physical quantity output as a predicted value and the physical quantity included in the validation data.

The training unit 160 and the inference unit 170 perform the machine learning and calculate the prediction accuracy, for each of the four patterns of selecting the validation data. The local subsystem setting unit 140 calculates the average prediction accuracy for the four patterns as the prediction accuracy of the trained model. Then, the local subsystem setting unit 140 adaptively changes the shape of the local subsystems based on the prediction accuracy of the trained model. In this way, the classical computer 100 evaluates the prediction accuracy of the trained model by cross-validation. Thus, the classical computer 100 is able to evaluate the prediction accuracy of the trained model without separately preparing training data and validation data, which reduces the amount of data used for training.

The following describes how the quantum computing system 300 operates. First, the procedure of the training phase will be described.

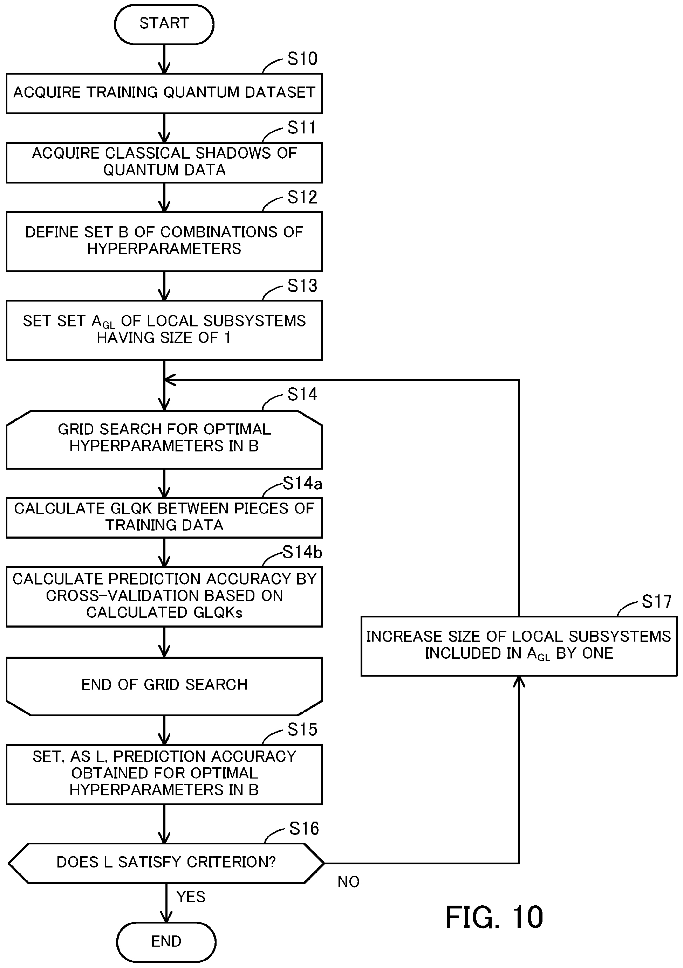

FIG. 10 is a flowchart illustrating an example of a training process.

(S10) The quantum computer 200 acquires a training quantum dataset.

(S11) The quantum computer 200 acquires classical shadows of quantum data. Specifically, the quantum computer 200 performs the operations defined by the quantum circuit 230 on a plurality of quantum data included in the training quantum dataset, thereby obtaining a plurality of training classical shadows. The classical shadow acquisition unit 130 acquires the data of the plurality of training classical shadows from the quantum computer 200.

(S12) The kernel calculation unit 150 defines a set B of combinations of hyperparameters. For example, in the case where Equation (4) is used to calculate the kernel function k_{A} in a local subsystem and Equation (6) is used to calculate GLQK, the kernel calculation unit 150 defines the set B of combinations of values of hyperparameters τ and γ in Equation (4) and the hyperparameter h in Equation (6).

(S13) The local subsystem setting unit 140 sets a set A_{GL} of local subsystems each having a size of 1. The local subsystem setting unit 140 sets the set A_{GL} of local subsystems each including one of lattice points mapped to qubits. Information on the correspondence between the lattice points and the qubits in the quantum data is stored in the input data storage unit 110 in advance.

(S14) The kernel calculation unit 150 performs a grid search for an optimal combination of hyperparameters in the set B. The kernel calculation unit 150 selects one combination of hyperparameters in the set B, and executes step S14a and step S14b. Step S14a and step S14b are iteratively executed while changing the combination of hyperparameters until the combination of hyperparameters that maximizes the prediction accuracy is found and the grid search is completed.

(S14a) The kernel calculation unit 150 calculates GLQK between pieces of training data. Specifically, the kernel calculation unit 150 calculates GLQK for each pair of training classical shadows among the plurality of training classical shadows.

(S14b) The training unit 160 and the inference unit 170 calculate the prediction accuracy by k-fold cross-validation based on the GLQKs calculated in step S14a. The training unit 160 generates a trained model by kernel ridge regression using the GLQKs between pieces of data selected as the training data among the data of the plurality of classical shadows. The inference unit 170 performs an inference process using the trained model and the GLQKs between the data selected as the validation data and the data selected as the training data, and calculates the prediction accuracies. The local subsystem setting unit 140 calculates the average prediction accuracy for the k patterns as the prediction accuracy of the trained model.

(S15) The local subsystem setting unit 140 sets, as L, the prediction accuracy obtained for the optimal hyperparameters in the set B.

(S16) The local subsystem setting unit 140 determines whether the prediction accuracy L satisfies a criterion. If the prediction accuracy L satisfies the criterion, the training process is completed. If the prediction accuracy L does not satisfy the criterion, the process proceeds to step S17. For example, the local subsystem setting unit 140 determines that the prediction accuracy L satisfies the criterion if the prediction accuracy L is greater than a threshold. The local subsystem setting unit 140 determines that the prediction accuracy L does not satisfy the criterion if the prediction accuracy L is equal to or less than the threshold. The threshold indicating the criterion to be satisfied by the prediction accuracy L is determined in advance.

(S17) The local subsystem setting unit 140 increases the size of the local subsystems included in the set A_{GL} of local subsystems by one. For example, the local subsystem setting unit 140 increases the number of lattice points on each of the vertical side and the horizontal side of the local subsystems each represented by a square, by one. Then, the process proceeds to step S14.

As described above, the classical computer 100 calculates a GLQK value for each pair of classical shadows, and performs machine learning of a model that outputs a predicted value in response to an input classical shadow, using the GLQK values calculated for the respective pairs of classical shadows. The classical computer 100 changes the hyperparameters of the model depending on the accuracy of predicted values, and performs the machine learning of the model based on the changed hyperparameters. Accordingly, the classical computer 100 is able to set appropriate hyperparameters and improve the accuracy of the model.

The classical computer 100 changes lattice points included in each local subsystem based on the accuracy of the predicted values outputted by the model. Accordingly, the classical computer 100 is able to appropriately determine the size and shape of the local subsystems. Here, the classical computer 100 increases the size of the local subsystems if the accuracy of the predicted values outputted by the model is lower than a threshold. As a result, the classical computer 100 is able to search for the size of the local subsystems starting from a smaller size and find an appropriate size of the local subsystems. As described above, the classical computer 100 adaptively determines the local subsystems and the hyperparameters, and thus is able to flexibly learn features having various length scales and complexities.

Further, the classical computer 100 calculates the accuracy of the predicted values by cross-validation using a plurality of classical shadows. Accordingly, the classical computer 100 is able to evaluate the prediction accuracy of the trained model without separately preparing training data and validation data, which reduces the amount of data used for training.

Next, the procedure of the inference phase will be described.

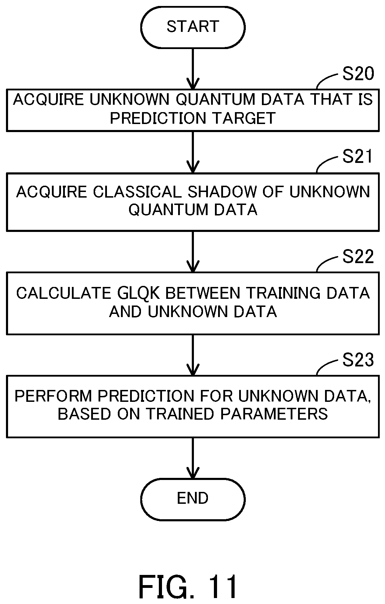

FIG. 11 is a flowchart illustrating an example of an inference process.

(S20) The quantum computer 200 acquires unknown quantum data that is a prediction target.

(S21) The quantum computer 200 acquires a classical shadow of the unknown quantum data. The classical shadow acquisition unit 130 acquires the data of the classical shadow corresponding to the unknown quantum data from the quantum computer 200.

(S22) The kernel calculation unit 150 calculates the GLQK between training data and the unknown data. Specifically, the kernel calculation unit 150 calculates the GLQK for each pair of each classical shadow used as training data when the final trained model is generated and the unknown classical shadow. The same equation as used in step S13 is used for the GLQK calculation of step S22. The size of the local subsystems is the size finally determined by the local subsystem setting unit 140 in the training phase.

(S23) The inference unit 170 performs prediction for the unknown data, that is, the unknown classical shadow, based on the GLQK calculation results and the trained parameters of the trained model. The inference unit 170 outputs the prediction result. Then, the inference process is completed.

The following describes how the classical computer 100 operates, using a specific problem as an example.

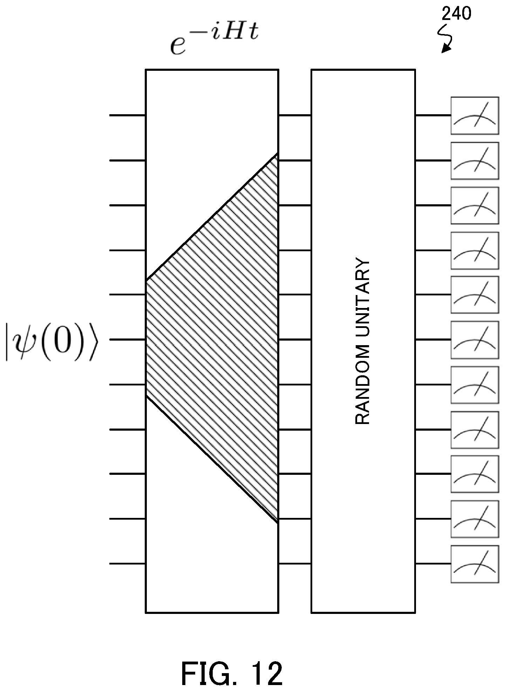

FIG. 12 illustrates a quantum circuit used in an experiment. In the experiment described below, the performance of the quantum computing system 300 is evaluated using a regression problem in a one-dimensional random XYZ model. The Hamiltonian H in this problem is expressed by Equation (17). $H = {\sum }_{j = 1}^{n - 1} \left({J}_{j}^{X}{X}_{j}{X}_{j + 1}+{J}_{j}^{Y}{Y}_{j}{Y}_{j + 1}+{J}_{j}^{Z}{Z}_{j}{Z}_{j + 1}\right)$ (17)

n denotes the number of qubits. Quantum data handled in this problem is expressed by Equation (18). $\left|ψ\left(t\right)\right〉 = {e}^{- iHt} \left|ψ\left(0\right)\right〉$ (18)

In Equation (18), t denotes time. |ψ(t)〉 denotes a quantum state at time t. |ψ(0)〉 denotes a random product state.
A quantum circuit 240 is a quantum circuit for generating the quantum state expressed by Equation (18). The quantum circuit 240 includes a quantum circuit representing an operation of applying e^{-iHt} to the quantum state |ψ(0)〉. In addition, the quantum circuit 240 includes a quantum circuit (random unitary) representing an operation of applying a quantum gate Uᵢ randomly selected from {I, H, HS^{†}} to each qubit of the quantum data. The quantum circuit 240 also includes a quantum circuit representing an operation of measuring all qubits in the Z basis. By performing the operations according to the quantum circuit 240, the quantum computer 200 is able to acquire a classical shadow of the quantum data expressed by Equation (18).

The quantum data used in the experiment is obtained by randomly sampling Jⱼ^{µ} ∈ [-1, 1] and t ∈ [0.2, 1.0] for each data. In |ψ(t)〉, quantum information propagates locally, and therefore the correlation function decays exponentially in a space.

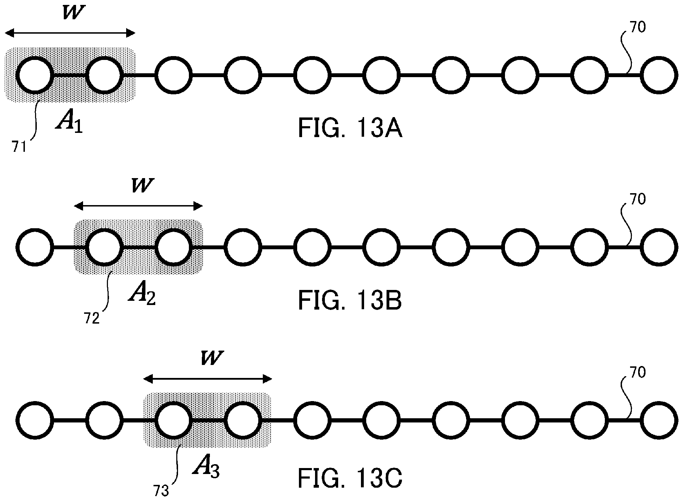

FIGS. 13A, 13B, and 13C illustrate examples of local subsystems used in the experiment. Local subsystems 71, 72, 73, ... are examples of local subsystems in a one-dimensional chain 70. The local subsystems 71, 72, 73, ... are identified by identifiers A₁, A₂, A₃, ..., respectively. w denotes the size of the local subsystems. The i-th local subsystem Aᵢ may be expressed as a set of the indices of the lattice points included in the local subsystem Aᵢ or a set of the indices of the qubits corresponding to the lattice points included in the local subsystem Aᵢ. The local subsystem Aᵢ is defined by Equation (19) using the size (width) w. ${A}_{i} = \left\{i,i+1,⋯,i+w-1\left(mod n\right)\right\} \left(i=1,2,⋯,n\right)$ (19)

Equation (19) may also be regarded as a set of the indices of the qubits corresponding to the lattice points belonging to Aᵢ. As given by Equation (19), the local subsystem setting unit 140 may set the local subsystem under a periodic boundary condition, in which the indices cycle from the end index to the first index.

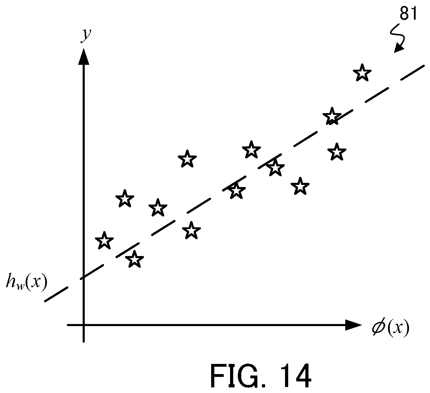

FIG. 14 is a diagram for describing regression analysis. Regression analysis is an example of a machine learning algorithm used by the classical computer 100. Regression analysis is a technique for predicting an output value for input data. A technique that performs linear regression in a feature space using a kernel function is referred to as kernel ridge regression. For example, a Python (registered trademark) library scikit-learn may be used as a regression analysis library.

Here, training datasets used for the regression analysis are represented as {xᵢ, yᵢ}ᵢ₌₁^{N}. xᵢ denotes input data. yᵢ denotes an output value corresponding to xᵢ. N denotes the number of datasets. The classical computer 100 obtains a model h_{w}(x) exemplified by a graph 81 based on the training datasets. The horizontal axis of the graph 81 represents a vector φ(x) obtained by applying a feature map to x. The vertical axis of the graph 81 represents the output value y. Star-shaped dots in the graph 81 represent the training datasets. The model h_{w}(x) is expressed by Equation (20). ${h}_{w} \left(x\right) = \left〈w,ϕ\left(x\right)\right〉$ (20)

w is a coefficient of a linear model. The training unit 160 determines an optimal w such that h_{w}(x) represents the relationship between φ(xᵢ) and yᵢ in the training datasets. The optimization problem is expressed by Equation (21). $w * = {argmin}_{w} \left[\frac{1}{2 N}{\sum }_{i = 1}^{N} {\left({y}_{i}-{h}_{w}\left({x}_{i}\right)\right)}^{2} + λ {\left‖w\right‖}^{2}\right]$ (21)

λ is a variable indicating the strength of regularization. The second term on the right-hand side of Equation (21) is a regularization term. In the kernel method, the training unit 160 solves an optimization problem in the dual representation. In the dual representation, the model is expressed by Equation (22). ${h}_{α} \left(x\right) = {\sum }_{i = 1}^{N} {α}_{i} k \left({x}_{i}, x\right)$ (22)

k(xᵢ, x) is the kernel between xᵢ and x. α is a vector satisfying α = (α₁, ..., α_{N}). The optimization problem in the dual representation is expressed by Equation (23). $α * = {argmin}_{α} \left[\frac{1}{2 N}{α}^{T}KKα-\frac{1}{N}{α}^{T}Ky+{λα}^{T}Kα\right]$ (23)

y is a vector satisfying y = (y₁, ..., y_{N}). K is a Gram matrix defined by Kᵢⱼ = k(xᵢ, xⱼ).

In the experiment, the classical computer 100 generates a trained model by solving the optimization problem of Equation (23) through machine learning using the training datasets, and predicts predetermined physical quantities for test datasets using the generated trained model. Here, the number of shots for obtaining a classical shadow is set to 500, and the number of qubits is set to 20. The physical quantities to be predicted are a local physical quantity <Z₁₀Z₁₁>, a long-range correlation coefficient <Z₁Z₂₀>, and the purity tr(ρ_{A}²) of the subsystem, where A = {11, 12}.

The classical computer 100 uses GLQK expressed by Equation (6) as the kernel function in Equation (23). As the kernel function in the local subsystems, the classical computer 100 uses the truncated linear shadow kernel expressed by Equation (15). The hyperparameter γ is fixed to γ = 1.

In the experiment, first, N training datasets and 500 test datasets are randomly selected from 4500 datasets. The classical computer 100 performs five-fold cross-validation on the N training datasets, and determines the width w of the local subsystems, the hyperparameter h, and the regularization parameter λ by a grid search. Here, w and h are selected from w ∈ {1, 2} and h ∈ {1, 2}. In addition, λ is selected from λ ∈ {0.001, 0.002, 0.004, 0.006, 0.008, 0.01, 0.02, 0.04, 0.06, 0.08, 0.1, 0.2, 0.3, 0.6, 0.8, 1.0, 2.0, 4.0, 6.0, 8.0, 10.0}.

Using the obtained hyperparameters, the classical computer 100 trains a model using the N training datasets, thereby creating the model. The classical computer 100 then calculates predicted values of a physical quantity for the test datasets using the generated trained model. Here, the classical computer 100 calculates the mean squared error between the correct physical quantities included in the test datasets and the predicted values as the prediction accuracy. The classical computer 100 repeats such training and inference ten times, and calculates the mean and variance of the prediction accuracy.

As a comparative example, an experiment is performed in a similar manner with a method that employs the shadow kernel expressed by Equation (1) as the kernel function of Equation (23). The hyperparameters γ and τ are fixed to γ = τ = 1.

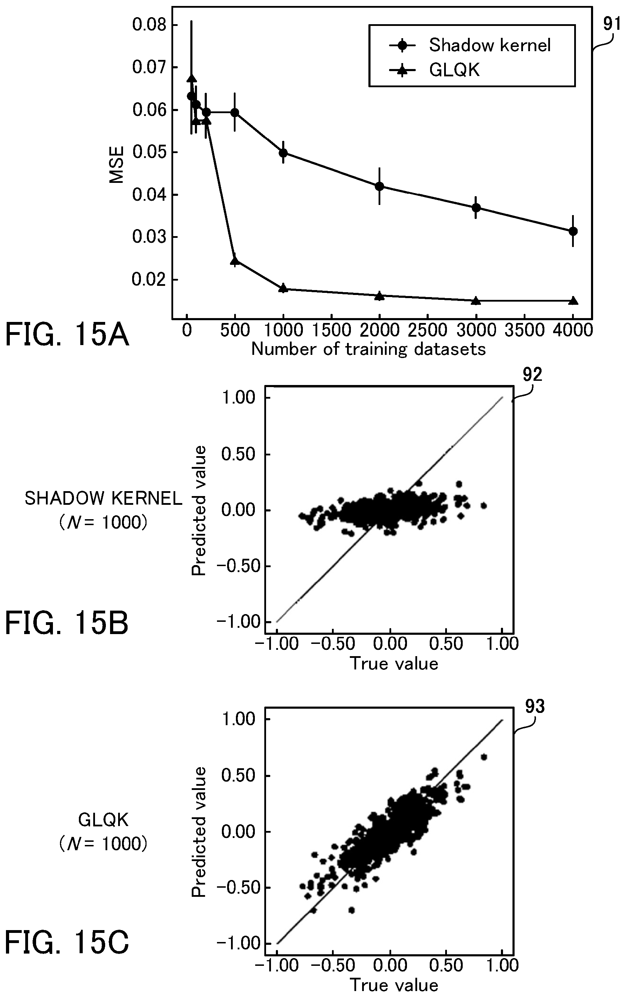

FIGS. 15A, 15B, and 15C illustrate examples of prediction results for a local physical quantity expectation value. Graphs 91, 92, and 93 present experimental results on the prediction of the local physical quantity expectation value <Z₁₀Z₁₁>. The graph 91 represents the relationships between the number of training datasets and the prediction accuracy. The horizontal axis of the graph 91 represents the number of training datasets. The vertical axis of the graph 91 represents the mean squared error (MSE). The graph 91 includes a line corresponding to the shadow kernel method and a line corresponding to the GLQK method.

The graph 91 indicates that, for both the shadow kernel method and the GLQK method, the mean squared error decreases (that is, the prediction accuracy increases) as the number of datasets increases. In addition, the graph 91 indicates that, with respect to the same number of training datasets, the GLQK method exhibits higher prediction accuracy than the shadow kernel method.

The graph 92 presents the relationship between predicted values and true values obtained by the shadow kernel method in the case where the number of training datasets is N = 1000. The horizontal axis of the graph 92 represents the true values. The vertical axis of the graph 92 represents the predicted values. The points in the graph
92 indicate prediction results for the test datasets obtained by the shadow kernel method. The line in the graph 92 indicates that the predicted values match the true values. That is, the closer the points representing the prediction results are to the line, the higher the prediction accuracy is.

The graph 93 presents the relationship between predicted values and true values obtained by the GLQK method in the case where the number of training datasets is N = 1000. The horizontal axis of the graph 93 represents the true values. The vertical axis of the graph 93 represents the predicted values. The points in the graph 93 indicate prediction results for the test datasets obtained by the GLQK method. The line in the graph 93 indicates that the predicted values match the true values.

The graphs 92 and 93 indicate that, in the case where the number of training datasets is N = 1000, the GLQK method exhibits higher prediction accuracy for the local physical quantity expectation value <Z₁₀Z₁₁> than the shadow kernel method.

As described above, the classical computer 100 is able to predict the local physical quantity expectation value <Z₁₀Z₁₁> with high accuracy using a smaller number of datasets. Since GLQK includes only spatially local information, the number of features is smaller than that of the shadow kernel method using a shadow kernel that includes spatially non-local information as well. As a result, it is possible to reduce the amount of training data used for learning features of quantum data having locality.

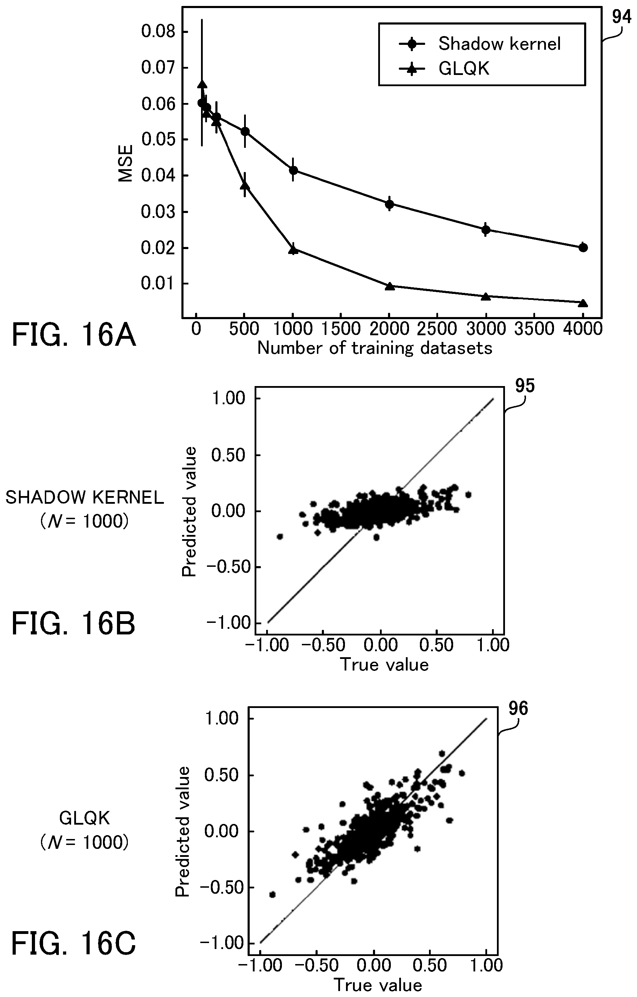

FIGS. 16A, 16B, and 16C illustrate examples of prediction results for a long-range correlation coefficient. Graphs 94, 95, and 96 present experimental results on the prediction of the long-range correlation coefficient <Z₁Z₂₀>. The graph 94 represents the relationship between the number of training datasets and the prediction accuracy. The horizontal axis of the graph 94 represents the number of training datasets. The vertical axis of the graph 94 represents the mean squared error. The graph 94 includes a line corresponding to the shadow kernel method and a line corresponding to the GLQK method.

The graph 94 indicates that, for both the shadow kernel method and the GLQK method, the mean squared error decreases as the number of datasets increases. Further, the graph 94 indicates that, with respect to the same number of training datasets, the GLQK method exhibits higher prediction accuracy than the shadow kernel method.

The graph 95 presents the relationship between predicted values and true values obtained by the shadow kernel method in the case where the number of training datasets is N = 1000. The horizontal axis of the graph 95 represents the true values. The vertical axis of the graph 95 represents the predicted values. The points in the graph 95 indicate prediction results for the test datasets obtained by the shadow kernel method. The line in the graph 95 indicates that the predicted values match the true values.

The graph 96 presents the relationship between predicted values and true values obtained by the GLQK method in the case where the number of training datasets is N = 1000. The horizontal axis of the graph 96 represents the true values. The vertical axis of the graph 96 represents the predicted values. The points in the graph 96 indicate prediction results for the test datasets obtained by the GLQK method. The line in the graph 96 indicates that the predicted values match the true values.

The graphs 95 and 96 indicate that, in the case where the number of training datasets is N = 1000, the GLQK method exhibits higher prediction accuracy for the long-range correlation coefficient <Z₁Z₂₀> than the shadow kernel method. Here, since the spatial regions where Z₁ and Z₂₀ act are far apart, <Z₁Z₂₀> itself is not included in the feature vector of GLQK. However, <Z₁Z₂₀> is approximated as <Z₁Z₂₀> ≈ <Z₁><Z₂₀> using <Z₁> and <Z₂₀> included in the GLQK feature vector. Therefore, the classical computer 100 is able to extract local features such as <Z₁> and <Z₂₀> using GLQK, and predict the long-range correlation coefficient <Z₁Z₂₀> with high accuracy using a smaller number of datasets.

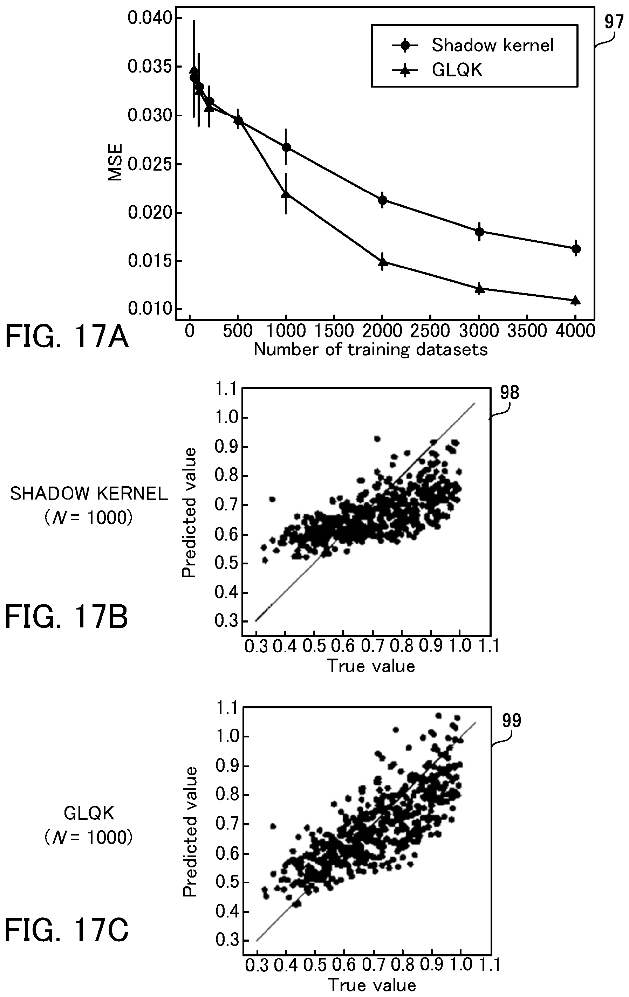

FIGS. 17A, 17B, and 17C illustrate examples of prediction results for the purity of a subsystem. Graphs 97, 98, and 99 present experimental results on the prediction of the purity tr(ρ_{A}²) of the subsystem. The graph 97 represents the relationship between the number of training datasets and the prediction accuracy. The horizontal axis of the graph 97 represents the number of training datasets. The vertical axis of the graph 97 represents the mean squared error. The graph 97 includes a line corresponding to the shadow kernel method and a line corresponding to the GLQK method.

The graph 97 indicates that, for both the shadow kernel method and the GLQK method, the prediction accuracy increases as the number of datasets increases. In addition, the graph 97 indicates that, with respect to the same number of training datasets, the GLQK method exhibits higher prediction accuracy than the shadow kernel method.

The graph 98 presents the relationship between predicted values and true values obtained by the shadow kernel method in the case where the number of training datasets is N = 1000. The horizontal axis of the graph 98 represents the true values. The vertical axis of the graph 98 represents the predicted values. The points in the graph 98 indicate prediction results for the test datasets obtained by the shadow kernel method. The line in the graph 98 indicates that the predicted values match the true values.

The graph 99 presents the relationship between predicted values and true values obtained by the GLQK method in the case where the number of training datasets is N = 1000. The horizontal axis of the graph 99 represents the true values. The vertical axis of the graph 99 represents the predicted values. The points in the graph 99 indicate prediction results for the test datasets obtained by the GLQK method. The line in the graph 99 indicates that the predicted values match the true values.

The graphs 98 and 99 indicate that, in the case where the number of training datasets is N = 1000, the GLQK method exhibits higher prediction accuracy for the purity tr(ρ_{A}²) of the subsystem than the shadow kernel method. By using GLQK, the classical computer 100 is also able to learn nonlinear features related to ρ, such as the purity tr(ρ_{A}²) of the subsystem.

As described above, the classical computer 100 calculates, for each of a plurality of local subsystems, a kernel function in that local subsystem using classical shadows. Then, the classical computer 100 calculates GLQK values based on the values of the kernel function calculated for the local subsystems.

Using the GLQK values, the classical computer 100 is able to extract local features of quantum data and perform machine learning. As a result, the classical computer 100 is able to efficiently learn local properties of quantum data in a problem relating to, for example, a material, a substance, or the like. Therefore, the classical computer 100 is able to reduce the number of pieces of training data used for machine learning.

Note that, in addition to the above example, the functions of the classical computer 100 are also applicable to, for example, local pattern recognition, local error detection in images, videos, quantum data output from the quantum computer 200, and the like.

Although the embodiments have been described above, the configuration of each unit described in the embodiments may be replaced with another configuration having the same function. In addition, any other components or processes may be added. Furthermore, any two or more configurations (features) of the above-described embodiments may be combined.

In one aspect, it is possible to reduce the number of pieces of training data used for machine learning.

In any of the above aspects, the various features may be implemented in hardware, or as software modules running on one or more processors/computers.

The present disclosure also provides a computer program or a computer program product comprising instructions which, when executed by a computer, cause the computer to carry out any of the methods/method steps described herein, and a (non-transitory) computer-readable medium comprising instructions which, when executed by a computer, cause the computer to carry out any of the methods/method steps described herein. A computer program may be stored on a (non-transitory) computer-readable medium, or it could, for example, be in the form of a signal such as a downloadable data signal provided from an Internet website, or it could be in any other form.

## Claims

1. A computer program that causes a computer to perform a process comprising:
acquiring data of a first classical shadow (11a) corresponding to first quantum data represented by a plurality of qubits and data of a second classical shadow (11b) corresponding to second quantum data represented by the plurality of qubits;
setting a plurality of local subsystems (1a, 1b, 1c, ...) each of which is a set of local lattice points in a space (1) having a plurality of lattice points corresponding respectively to the plurality of qubits;
calculating, for each of the plurality of local subsystems (1a, 1b, 1c, ...), a value of a first kernel function based on a first data element and a second data element corresponding to a lattice point belonging to the each of the plurality of local subsystems among a plurality of first data elements corresponding to the plurality of qubits, the plurality of first data elements being included in the first classical shadow (11a), and a plurality of second data elements corresponding to the plurality of qubits, the plurality of second data elements being included in the second classical shadow (11b); and
calculating a value of a second kernel function corresponding to the first classical shadow (11a) and the second classical shadow (11b) based on a plurality of values of the first kernel function corresponding respectively to the plurality of local subsystems (1a, 1b, 1c, ...).

2. The computer program according to claim 1, wherein the process includes:
calculating a value of the second kernel function for each pair of classical shadows among a plurality of classical shadows corresponding to a plurality of quantum data including the first quantum data and the second quantum data;
performing machine learning of a model that outputs a predicted value in response to an input of a classical shadow, using the value of the second kernel function calculated for the each pair of classical shadows;
changing a hyperparameter of the model based on an accuracy of the predicted value; and
performing the machine learning of the model based on the changed hyperparameter.

3. The computer program according to claim 2, wherein the changing of the hyperparameter includes changing a lattice point included in each of the plurality of local subsystems (1a, 1b, 1c, ...), based on the accuracy of the predicted value outputted by the model.

4. The computer program according to claim 3, wherein the changing of the lattice point included in the each of the plurality of local subsystems includes increasing a size of the plurality of local subsystems (1a, 1b, 1c, ...) in response to the accuracy of the predicted value outputted by the model being lower than a threshold.

5. The computer program according to any of claims 2 to 4, wherein the performing of the machine learning of the model includes calculating the accuracy of the predicted value by cross-validation using the plurality of classical shadows corresponding to the plurality of quantum data.

6. A calculation method executed by a computer, the calculation method comprising:
acquiring data of a first classical shadow (11a) corresponding to first quantum data represented by a plurality of qubits and data of a second classical shadow (11b) corresponding to second quantum data represented by the plurality of qubits;
setting a plurality of local subsystems (1a, 1b, 1c, ...) each of which is a set of local lattice points in a space (1) having a plurality of lattice points corresponding respectively to the plurality of qubits;
calculating, for each of the plurality of local subsystems (1a, 1b, 1c, ...), a value of a first kernel function based on a first data element and a second data element corresponding to a lattice point belonging to the each of the plurality of local subsystems among a plurality of first data elements corresponding to the plurality of qubits, the plurality of first data elements being included in the first classical shadow (11a), and a plurality of second data elements corresponding to the plurality of qubits, the plurality of second data elements being included in the second classical shadow (11b); and
calculating a value of a second kernel function corresponding to the first classical shadow (11a) and the second classical shadow (11b) based on a plurality of values of the first kernel function corresponding respectively to the plurality of local subsystems (1a, 1b, 1c, ...).

7. An information processing apparatus comprising:
storage means configured to store data of a first classical shadow (11a) corresponding to first quantum data represented by a plurality of qubits and data of a second classical shadow (11b) corresponding to second quantum data represented by the plurality of qubits; and
processing means configured to:
set a plurality of local subsystems (1a, 1b, 1c, ...) each of which is a set of local lattice points in a space (1) having a plurality of lattice points corresponding respectively to the plurality of qubits;
calculate, for each of the plurality of local subsystems (1a, 1b, 1c, ...), a value of a first kernel function based on a first data element and a second data element corresponding to a lattice point belonging to the each of the plurality of local subsystems among a plurality of first data elements corresponding to the plurality of qubits, the plurality of first data elements being included in the first classical shadow (11a), and a plurality of second data elements corresponding to the plurality of qubits, the plurality of second data elements being included in the second classical shadow (11b); and
calculate a value of a second kernel function corresponding to the first classical shadow (11a) and the second classical shadow (11b) based on a plurality of values of the first kernel function corresponding respectively to the plurality of local subsystems (1a, 1b, 1c, ...).

8. A computer-readable storage medium having the computer program of any of claims 1 to 5 stored thereon.
